# DEMANDE DE BREVET EUROPEEN

(11) **EP 3 106 914 A1**
(43) Date de publication de la demande: **21.12.2016**
(21) Numéro de dépôt: 16174110.3
(22) Date de dépôt: 13.06.2016
(51) Int. Cl.: G02C 1/04, G02C 1/00

(54) **LUNETTES A MONTAGE DES VERRES SIMPLIFIE**

(30) Priorité: 18.06.2015 FR 1555579
(71) Demandeur: Sonthonnax, Alexandre, 1207 Genève (CH); Japan Optical Co., Ltd, Ritto City, Shiga 520-3024 (JP)
(72) Inventeur: SONTHONNAX, Alexandre, 1207 GENEVE (CH); KIMURA, Tatsuro, RITTO-CITY, Shiga 520-3024 (JP)
(74) Mandataire: Cabinet Laurent & Charras

(57) **Abrégé**

Ces lunettes comportent des verres (1) et une structure de maintien et de positionnement (3, 14, 15) de ces derniers sur le visage de l'utilisateur.

Au sein de ces lunettes :
- les verres (1) sont chacun munis de deux prolongements latéraux (6, 8), eux-mêmes munis d'excroissance (7, 10) faisant saillie selon deux plans sensiblement perpendiculaires ;
- la structure de maintien est munie d'évidements (11, 12) aptes à recevoir lesdits prolongements (6, 8).

## Description

### DOMAINE TECHNIQUE

L'invention concerne des lunettes dont les verres peuvent être montés par l'opticien rapidement et immédiatement après le choix par l'utilisateur de la monture sélectionnée.

L'invention s'applique tant aux lunettes de vue qu'aux lunettes de soleil.

### ETAT ANTERIEUR DE LA TECHNIQUE

Les lunettes sont traditionnellement constituées d'une monture, comportant des branches et une partie frontale, la partie frontale reposant sur le nez de l'utilisateur et les branches servant à assurer leur maintien sur le visage de l'utilisateur. Cette monture reçoit des verres, notamment optiques, de lecture ou solaires, insérés dans des drageoirs ménagés au sein de la zone frontale de la monture.

Alternativement, il existe également des lunettes dépourvues de zone frontale proprement dite, les verres étant directement solidarisés à un nez et aux branches assurant le maintien de la lunette sur le visage de l'utilisateur.

Dans un cas comme dans l'autre et plus particulièrement dans le cadre des verres optiques, l'opticien doit disposer d'un stock conséquent et de verres et de montures, afin de satisfaire aux exigences de l'utilisateur en termes de choix, et de la prescription médicale en termes de puissance des verres.

Afin de pallier cet inconvénient, on a proposé par les enseignements du document CN 203573032 une monture de lunettes dont la face frontale ne comporte qu'une zone inférieure, munie de drageoirs, et permettant l'insertion par la zone supérieure des verres. Cette monture présente ainsi l'avantage de permettre un montage rapide desdits verres au sein de la monture en fonction des choix de l'utilisateur et de la prescription médicale.

Cependant, l'expérience démontre que les verres peuvent être facilement escamotés, susceptibles d'induire leur dégradation, voire leur perte.

La présente invention a pour objectif de pallier cet inconvénient et de proposer un système de lunettes dans lesquels les verres, une fois en place, ne peuvent plus être escamotés de la monture ou des éléments nécessaires au maintien des verres sur le visage de l'utilisateur.

### EXPOSE DE L'INVENTION

A cet effet, l'invention propose des lunettes comportant des verres et une structure de maintien et de positionnement de ces derniers sur le visage de l'utilisateur dans lesquelles :
- les verres sont chacun munis de deux prolongements latéraux, eux-mêmes munis d'excroissance faisant saillie selon deux plans sensiblement perpendiculaires ;
- la structure est munie d'évidements aptes à recevoir lesdits prolongements.

En d'autres termes, l'invention consiste à munir les verres typiquement obtenus par injection, de moyens aptes à assurer leur coopération irréversible avec des moyens ménagés au sein de la monture ou au sein des éléments assurant le maintien des verres sur le visage de l'utilisateur.

Ce faisant, tout d'abord, on optimise la gestion des stocks des opticiens, et d'autre part, on assure pour l'acquéreur de ces montures une pérennité dans le temps, puisqu'aussi bien, les verres ne peuvent plus être escamotés volontairement ou de manière intempestive de ladite monture.

Selon une caractéristique de l'invention, chacun des verres présente un prolongement au niveau de son bord latéral externe, ledit prolongement étant muni d'une excroissance biseautée faisant saillie par rapport au plan dans lequel s'inscrit ledit prolongement, la structure de réception des verres comportant une branche terminée par un tenon pourvu d'un évidement de forme complémentaire audit prolongement, et présentant une certaine élasticité afin de permettre l'encliquettement de l'excroissance biseautée au sein de l'évidement.

Selon une autre caractéristique de l'invention, chacun des verres est muni d'un prolongement s'étendant au niveau du bord latéral interne, muni d'une excroissance s'étendant dans le plan dans lequel s'inscrit ledit prolongement, et apte à coopérer avec un évidement de forme complémentaire ménagé au niveau du nez de la monture ou d'un nez indépendant.

Selon une autre caractéristique de l'invention, lorsque la lunette comporte une monture, celle-ci présente une zone frontale partielle, inférieure ou supérieure, munie de drageoirs aptes à recevoir la zone inférieure ou supérieure du verre. On optimise de la sorte le maintien des verres au sein de la monture.

### BREVE DESCRIPTION DES FIGURES

La manière dont l'invention peut être réalisée et les avantages qui en découlent, ressortiront mieux de l'exemple de réalisation qui suit, donné à titre indicatif, et non limitatif, à l'appui des figures annexées.
La figure 1 est une représentation schématique en éclaté d'une monture conforme à l'invention.
La figure 2 est une représentation détaillée d'éléments de la figure 1.
La figure 3 illustre les étapes de mise en place d'un verre au sein d'une monture conforme à l'invention.

### DESCRIPTION DETAILLEE DE L'INVENTION

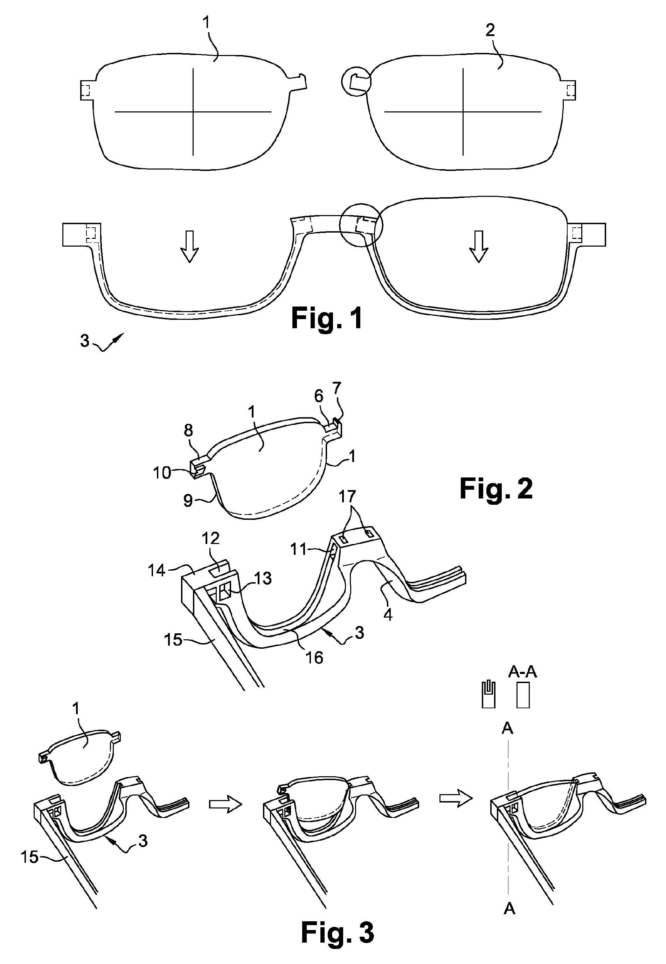

On a donc représenté en relation avec la figure 1 une vue en éclaté d'une lunette conforme à l'invention.

Plus précisément, ont été représentés les verres **1** et **2**, ainsi que la partie ou zone frontale **3** d'une monture.

Dans l'exemple décrit, cette zone frontale est partielle, en ce sens qu'elle n'entoure pas l'intégralité des verres **1** et **2.** Plus précisément dans l'exemple décrit, cette zone frontale est une zone inférieure, étant cependant souligné qu'il peut être envisagé une zone supérieure dans laquelle les verres seraient insérés par la voie inférieure, sans pour autant se départir de l'esprit de la présente invention.

Plus précisément, en relation avec la figure 2, ont été représentés les différents détails des caractéristiques de l'invention.

Ainsi donc, le verre **1**, dont la zone inférieure est d'épaisseur standard et la zone supérieure présente une épaisseur adaptée à la puissance prescrite par l'ophtalmologiste, est destiné à venir s'insérer dans un drageoir **16**, ménagé dans la zone frontale **3.**

Ce verre **1** présente au niveau de son bord latéral interne **5** un prolongement **6** muni d'un ergot **7** dirigé vers le haut, et donc s'étendant sensiblement dans le plan dans lequel s'inscrit ledit prolongement **6.** Ce prolongement **6** est destiné à venir s'insérer dans un évidement **11,** selon une action pivot, cet évidement **11** étant de forme complémentaire, et ménagé au niveau de la zone centrale de la partie frontale **3**, plus précisément au niveau du nez **4.**

Corollairement, le verre **1** présente au niveau de son bord latéral externe **9** un second prolongement **8,** muni d'un ergot **10** de forme biseautée. Cet ergot **10**, ainsi que représenté en relation avec la figure 2, fait saillie par rapport au plan dans lequel s'inscrit ledit prolongement **8.** De fait, l'ergot **10** s'étend sensiblement perpendiculairement par rapport à l'ergot **7** du prolongement **6**.

Ce prolongement **8** est destiné à être reçu dans un évidement **12** ménagé au niveau du tenon **14** de la branche **15** de la monture. Ce tenon est muni d'un orifice **13**, destiné à coopérer avec l'ergot **10.**

Dans la mesure où la largeur de l'évidement **12** correspond au jeu près à l'épaisseur du prolongement **8**, le tenon **14** est réalisé en matière telle qu'il présente une certaine élasticité pour autoriser l'introduction dudit prolongement **8** dans l'évidement **12** en tenant compte de la surépaisseur générée par l'ergot **10**, jusqu'à ce que ce dernier vienne se clipser dans l'orifice **13.** Cette élasticité est relative de telle sorte à interdire, après clipsage de l'ergot **10** dans la lumière **13**, le retrait du verre.

On a représenté en relation avec la figure 3 l'opération de fixation du verre sur la monture. Ainsi, le verre est présenté à l'aplomb de la zone frontale **3**. En l'espèce, ladite zone frontale étant inférieure, le verre est présenté par le dessus.

Le verre est basculé, de telle sorte à permettre l'introduction du prolongement **6** dans l'évidement **11** à l'instar d'un pivot, jusqu'à ce que l'ergot **7** pénètre dans le logement **17** prévu à cet effet dans le nez de la zone frontale **3** de la monture.

Puis le verre est re-basculé afin de permettre l'introduction du prolongement **8** dans l'évidement **12** du tenon **14**, jusqu'à aboutir à la coopération effective de l'ergot **10** dans la lumière **13.**

En raison de la forme biseautée de l'ergot **10**, le verre se retrouve ainsi bloqué de manière irréversible au sein de la zone frontale **3** de la monture, et il ne peut plus, dès lors, être escamoté.

On conçoit, ce faisant, qu'en raison de ce principe de montage des verres, l'opticien dispose de la possibilité de ne conserver qu'un stock réduit de montures, outre de verres, la gamme des puissances desdits verres étant, de manière générale, limitée.

Bien évidemment, l'invention s'applique également aux lunettes de soleil pour lesquelles les verres ne présentent pas nécessairement de fonction optique autre que de filtration des rayons du soleil.

## Revendications

1. Lunettes comportant des verres (1, 2) et une structure de maintien et de positionnement (3, 14, 15) de ces derniers sur le visage de l'utilisateur, ladite structure de maintien étant constituée par une monture, dont la zone frontale (3) est partielle, inférieure ou supérieure, et est munie de drageoirs (16) aptes à recevoir la zone inférieure ou supérieure des verres, lunettes dans lesquelles :
- les verres (1, 2) sont chacun munis de deux prolongements latéraux (6, 8), eux-mêmes munis d'excroissance (7, 10) faisant saillie selon deux plans sensiblement perpendiculaires ;
- la structure de maintien est munie d'évidements (11, 12) aptes à recevoir lesdits prolongements (6, 8).

2. Lunettes selon la revendication 1, ***caractérisées* en ce que** chacun des verres (1, 2) présente un prolongement (8) s'étendant depuis son bord latéral externe (9), ledit prolongement (8) étant muni d'une excroissance biseautée (10) faisant saillie par rapport au plan dans lequel s'inscrit ledit prolongement (8), la structure de maintien des verres comportant une branche (15) terminée par un tenon (14) pourvu d'un évidement (12) de forme complémentaire audit prolongement, et présentant une certaine élasticité afin de permettre l'encliquettement de l'excroissance biseautée (10) au sein de l'évidement.

3. Lunettes selon les revendications 1 et 2, ***caractérisées* en ce que** chacun des verres est muni d'un prolongement (6) s'étendant depuis son bord latéral interne (5), muni d'une excroissance (7) s'étendant dans le plan dans lequel s'inscrit ledit prolongement, et apte à coopérer avec un évidement (11) de forme complémentaire ménagé au niveau du nez (4) de la monture ou d'un nez indépendant.
